# EUROPEAN PATENT SPECIFICATION

(11) **EP 1 639 800 B1**
(45) Date of publication and mention of the grant of the patent: **09.03.2016**
(21) Application number: 03753574.7
(22) Date of filing: 18.06.2003
(51) Int. Cl.: H04M 15/00

(54) **ONLINE CHARGING IN MOBILE NETWORKS**
ONLINE ABRECHNUNG IN MOBILEN NETZWERKEN
PROCEDE DE DEBIT EN LIGNE DANS DES RESEAUX MOBILES

(43) Date of publication of application: 29.03.2006
(73) Proprietor: Telefonaktiebolaget LM Ericsson (publ), 164 83 Stockholm (SE)
(72) Inventor: AHLBÄCK, Hans, FIN-20720 Turku (FI); HAKALA, Harri, Tapani, FIN-20380 Turku (FI); KUIKKA, Matti, FIN-21310 Vahto (FI)
(74) Representative: Ericsson
(86) International application number: PCT/EP2003/050235
(87) International publication number: WO 2005/004456

(56) References cited:
- EP-A- 1 104 973
- EP-A1- 1 713 289
- US-A- 5 412 726
- US-A1- 2001 037 264
- US-A1- 2002 161 723
- US-A1- 2003 033 518
- KRAYEM-NEVOUX R ET AL: "Payphone service for third generation mobile systems" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 November 1993 (1993-11-29), pages 1708-1712, XP010109936 ISBN: 0-7803-0917-0
- '3GPP TS ab.cde V0.2.0 (2003-5): 3rd Generation Partnership Project;Technical Specification Group Services and System Aspects; Bootstrapping of application security using AKA and Support for Subscriber Certificates; System Description', [Online] 31 May 2003, INTERNET Retrieved from the Internet: <URL:http://webstats.3gpp.org/ftp/tsg_sa/WG 3_Security/TSGS3_29_SanFran/Docs/PDF/S3-030 469.pdf> [retrieved on 2009-12-08]
- SA3: 'Ls on "support of subscriber certificates"', [Online] 28 February 2003, INTERNET Retrieved from the Internet: <URL:http://www.3gpp.org/ftp/tsg_sa/WG3_Sec urity/TSGS3_27_Sophia_Antipolis/Docs/PDF/S3 -030131.pdf> [retrieved on 2009-12-09]
- '"Digital cellular telecommunications system (Phase 2+); Universal Mobile Telecommunications System (UMTS); Telecommunication management; Charging management; Charging principles (3GPP TS 32.200 version 5.4.0 Release 5); ETSI TS 132 200",' XP014009928
- 3GPP: "3GPP TS 33.220 v6.0.0 (2004-03) 3rd Generation Partnership Project; Technical Specification Group Services and System Aspects; Generic Authentication Architecture (GAA); Generic bootstrapping architecture (Release 6)", 3RD GENERATION PARTNERSHIP PROJECT (3GPP); TECHNICALSPECIFICATION (TS), XX, XX, vol. 33.220, no. V6.0.0, 22 March 2004 (2004-03-22), pages 1-18, XP002422872,

## Description

### Field of the Invention

The present invention relates to online charging in mobile communication networks and more particularly to the use of accounting certificates for online charging.

### Background to the Invention

In the near future, the use of electronic cash to pay for products and services is likely to become widespread. In many cases, electronic cash will be issued by banks. However, where payments are to be made using a mobile communication device, it may be convenient for the electronic cash to be issued by a subscriber's home network operator. This is true especially where the subscriber is paying for a service which is accessed using his or her mobile communication device, e.g. the downloading of data from an Internet server to the device, for viewing by the subscriber. The amount of electronic cash provided to a subscriber can be added to that subscriber's bill, or deducted from a credit account in the case of pre-paid subscribers.

The Third Generation Partnership Protocol (3GPP) is involved in the ongoing development of standards for third generation mobile cellular networks. One aspect of this ongoing work is the handling of the issuing, use, and management of subscriber certificates (see 3GPP TS ab.cde V0.2.0 (2003-05)). Subscriber certificates are issued in order to authorize and account for service usage both in home and in visited network. A subscriber certificate can be for example one of the following types:
authorization certificate
authentication certificate
accounting certificate

The use of accounting certificates in particular is intended to make it possible for a user to use chargeable services, e.g. via the Internet. Accounting certificates may be short-lived certificates which are valid for a relatively short time period and can be used only once. These certificates do not require complex and expensive management systems for checking their validity, but at the same time keep the risks of fraud low. As yet there is no clearly defined mechanism (within the 3GPP proposals or standards) regarding how to control the payment/charging flow when an accounting certificate is issued and used.

ETSI TS 132200 v5.4.0 (2003-06) discloses charging management and charging principles.

### Summary of the Invention

It has been identified that there is a need to link the use of accounting certificates to existing network charging mechanisms used by mobile network operators.

According to a first aspect of the present invention there is provided a method of using accounting certificates to allow a subscriber of a home network to purchase services or products via a mobile communications network, characterised in that the method comprises:
sending a request for an accounting certificate from a subscriber's mobile terminal to a Network Application Function in a visited network, the Network Application Function comprising a Public Key Infrastructure portal which uses shared secret keys to communicate with said subscriber's mobile terminal;
upon receipt of the request at said node, communicating between the Public Key Infrastructure portal and a Bootstrapping Server Function of the subscriber's home network to obtain at the Public Key Infrastructure portal a shared secret previously agreed between the Bootstrapping Server Function and the subscriber's mobile terminal and an identity of the responsible online charging system within the home network, and using said identity to send an authorisation request from said Network Application Function to said online charging system;
at the online charging system, making a decision on said request based upon the subscriber's account data, and returning either an accept or deny service request message to said Network Application Function;
in the event that an accept service request message is received by said Network Application Function, sending the requested accounting certificate to the subscriber terminal; and
sending the accounting certificate from the subscriber terminal to the provider of a product or service to be paid for.

The online charging system to which said authorisation request is sent is responsible for coordinating all charges made against subscribers of the home network. Upon receiving an authorisation request, and upon acceptance of that request, the online charging system may make a credit reservation against the subscriber's account for the value of the accounting certificate.

In certain embodiments, the provider of a product or service sends an invoice to the subscriber terminal for products or services which the subscriber proposes to purchase. After receipt of this invoice, the subscriber terminal sends the request for the accounting certificate to the Network Application Function. In other embodiments, the request is sent, and optionally the certificate returned to the subscriber terminal, prior to receipt of the invoice at the terminal.

Preferably, the provider of a product or service to be paid for sends received accounting certificates to said Network Application Function for settlement. This may be sent together with an invoice signed by the subscriber. Upon receipt of this information, the certificate issuing node may inform said online charging system of the consumption of the issued accounting certificate, and the online charging system then updates the subscriber's account data.

In a typical embodiment of the invention, the provider of the service maintains a server which receives accounting certificates from subscriber terminals. The server is attached to an IP network, e.g. the Internet, and communicates with the subscriber terminal and said certificate issuing node via that IP network. The server may be operated by the subscriber's home network or, in the case of a roaming subscriber, by the visited network. Alternatively, the service provider may be external to the home or visited network, but have a billing relationship with the home or visited network.

Preferably, said accounting certificate is secured by bootstrapping on an authentication and shared secret agreement procedure performed between the mobile terminal and the subscriber's home network. More preferably, this procedure is the Authentication and Key Agreement (AKA) procedure.

According to a second aspect of the present invention there is provided a Network Application Function node for use in a first network of a mobile communications system, the node having an interface towards one or more online charging functions, each online charging function coordinating charges for subscribers of a home network to which the online charging function belongs, an interface towards one or more product or service providers, and an interface towards subscribers roaming in said first network and wishing to purchase products or services made available by said providers, the node being characterised by:
a Public Key Infrastructure portal which uses shared secret keys to communicate with subscriber's mobile terminal;
means for receiving from a subscriber an accounting certificate request;
means for communicating between the Public Key Infrastructure portal and a Bootstrapping Server Function of the subscriber's home network to obtain at the Public Key Infrastructure portal a shared secret previously agreed between the Bootstrapping Server Function and the subscriber's mobile terminal and an identity of the responsible online charging system within the home network, and for using said identity to send an authorisation request from said node to an online charging system of the subscriber's home network;
means for receiving an accept or deny request from said online charging function; and
means for sending the requested accounting certificate to the subscriber terminal in the event that an accept service request message is received by the node.

### Brief Description of the Drawings

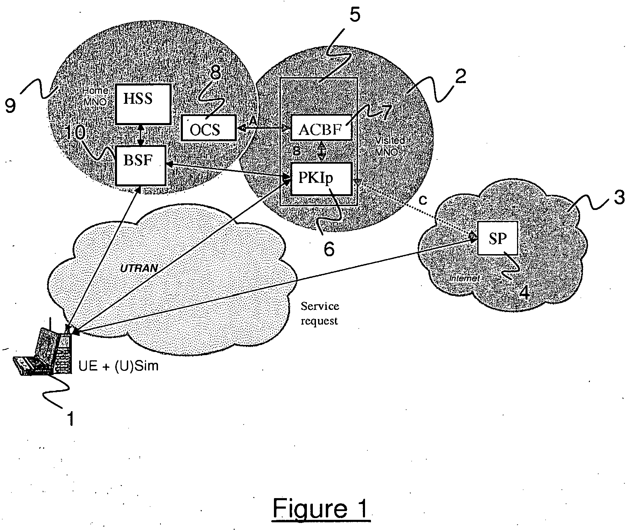

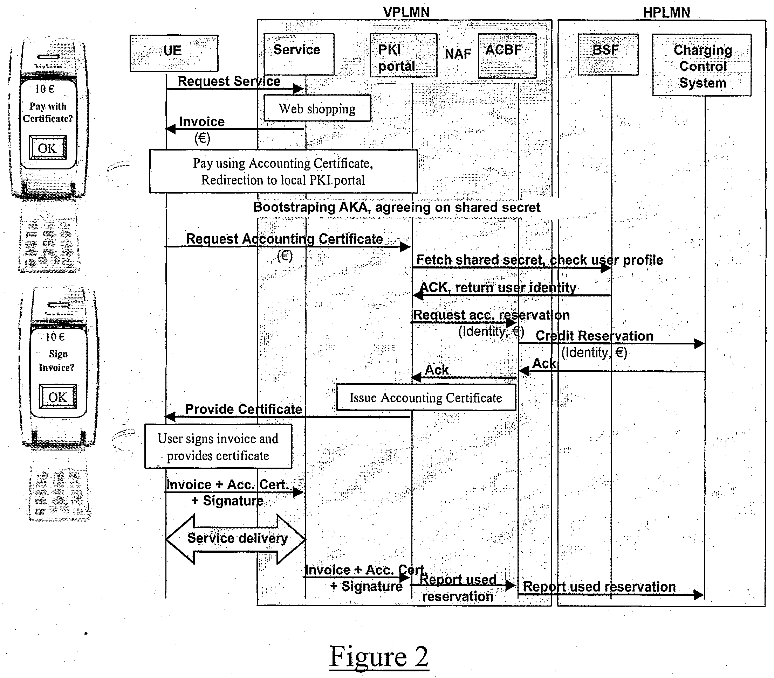

Figure 1 illustrates schematically a mobile telecommunications system 111 which a mobile subscriber is roaming in a visited network; and Figure 2 illustrates signalling associated with the purchase of a service by the mobile subscriber using an accounting certificate.

### Detailed Description of Certain Embodiments

There will now be described a method for associating the use of accounting certificates as proposed for 3GPP, with existing 3GPP online charging mechanisms, thus making it possible for a mobile subscriber to use the issued certificates to pay for services/products not necessarily controlled by the subscriber's home operator. To minimize the financial risk for all involved parties, it is proposed that the issuing and use of accounting certificates is coupled directly to the user's charging account within the home network, by means of real time credit control mechanism.

Figure 1 illustrates schematically a mobile communications system in which a mobile subscriber using a mobile terminal or UE 1 is roaming in a visited UMTS network. The terminal 1 is attached to a radio access network (UMTS Terrestrial Radio Access Network, UTRAN) 2. Through this access network, the mobile subscriber is able to make voice and data calls and request multimedia services, and access data services. In particular, the subscriber is able to connect to the Internet 3, for example to communicate with an online merchant or service provider (SP). This merchant operates a server 4 from which the subscriber may download information for a fee. For example, for a fee of 1€, the subscriber may download a map of a town or city.

The online merchant has a billing arrangement with the operator of the visited network, but not with the operator of the subscriber's home network. That is to say that the merchant will trust accounting certificates issued by the visited network but not by the home network. To pay for a requested service, the mobile subscriber must obtain an accounting certificate from the visited network. An alternative reason for the online merchant requiring certificates issued by the visited network is to avoid complex cross-certificates and management of the cross-certificates. To make certificates widely available, the PKI portals (Certification Authorities) must issue cross-certificates for each other, so that the user can use his/her certificates in other domain as well as well as his/her home domain. In the scenario considered here (i.e. mobile operator as PKIp), to avoid having to issue cross-certificates between operators, it may be easier to use only the visited network operator's certificates, since local online merchants can easily recognise these certificates.

Figure 1 illustrates an accounting certificate issuing node, referred to here as the Network Access Function (NAF) node 5, which is owned by the operator of the visited network, the visited Mobile Network Operator (MNO). The NAF 5 comprises a Public Key Infrastructure portal (PKIp) 6 and an Accounting Certificate Broker Function (ACBF) 7. [PKI refers to a "system" of certification authorities, and optionally registration authorities and other supporting servers, that perform certificate management, archive management, key management, certificate distribution and token management functions for a community of users. For further details see IETF RFC 2510.] Whilst a NAF comprising a PKIp is introduced in the current 3GPP proposals (see 3GPP TS ab.cde V0.2.0 (2003-05)), the ACBF is a new function. The ACBF 7 acts as a "broker" between the PKIp 6 and the Online Charging System (OCS) 8 in the user's home network 9. The OCS 8 (see 3GPP TS 32.200 Charging Management; Charging Principles) is responsible for collecting all charging information associated with a given subscriber of the home network, including call charges, data charges, and charges incurred as a result of the purchase of products or services. The OCS maintains account data (credit/debit) for subscribers, e.g. for prepaid subscribers.

With respect to the 3GPP network architecture, new interfaces are introduced between the ACBF 7 and the OCS 8 (interface A), between the ACBF 7 and the PKIp 6 (interface B), and between the ACBF 7 and the online merchants 4 (interface C). Apart from these interfaces and the ACBF, all entities and interfaces either already exist in 3GPP (Rel-5) or about to be introduced in Rel-6: BSF and NAF (as PKI portal) for bootstrappping of subscriber certificates (by 3GPP SA3), OCS for online Charging Architecture (by 3GPP SA5).

The PKIp 6 uses the ACBF 7 to perform a credit check on the account from where money will be reserved for an issued accounting certificate, and also to withdraw the reserved monetary amount when service is delivered and transaction evidence is received from the service provider. It is proposed that communications over the A interface use the so-called Ro interfaces specified in 3GPP TS 32.200, Charging Management; Charging Principles, which is based on the Diameter Credit-control application.

In a typical scenario, a subscriber accesses an Internet page of the online merchant 4. The subscriber identifies a product or service which he wishes to purchase. The merchant sends an invoice for the appropriate amount to the subscriber's terminal 1. At this point, or possibly earlier, an AKA bootstrapping procedure (see 3GPP TS 33.102, 3G Security; Security Architecture) is performed between the terminal 1 and a Bootstrapping Server Function (BSF) 10 of the subscriber's home network. This establishes a shared secret between the terminal 1 and the BSF 10.

Upon receipt of a request from the UE, the PKIp first contacts the BSF 10 of the subscriber's home network to obtain the address of the responsible OCS (this is obtained by the BSF from the HSS in the home network) and the (AKA) shared secret. At this point in time, the home network may make a decision that accounting certificates cannot be issued to the requesting subscriber, e.g. to prevent a certain subscriber from accessing a premium rate service. Any such decision is communicated to the PKIp, whereupon the procedure is terminated and the terminal 1 notified. However, assuming that no such bar is placed on the subscriber by the home network, the ACBF will contact the OCS (interface A) in the home network. The correct OCS can be located based upon information provided by the subscriber profile. The OCS performs a credit check on the subscriber. Assuming that the subscribers account has sufficient credit in his account, a credit reservation based on the information supplied by the service provider is made at the OCS 8. If necessary, at this point the home operator can place restrictions on service use in case for example there is not enough credit in a subscriber's account. This decreases the financial risk to the home operator.

An accept request message is signalled from the OCS 8 to the ACBF 7. An Accounting Certificate can then be issued by the PKI portal and sent to the UE 1. The certificate is secured using the shared secret obtained by the PKIp from the BSF such that the terminal is able to verify the authenticity of the certificate. The certificate may also be signed with a private key (of a private-public key pair) of the PKIp. When the subscriber has consumed some service and signed the related invoice, this is sent by the UE 1 to the online merchant 4 together with the accounting certificate. The online merchant authenticates the certificate, e.g. using the public key of the PKIp. The PKIp 6 will receive the signed invoice together with the accounting certificate from the merchant (interface C). The PKIp 6 relays the information to the ACBF 7 which reports consumption information to the OCS 8. The ACBF 7 can also generate a record containing the accounting certificate and the signed invoice (as evidence of the transaction). These records can later be used for handling settlements, both towards the merchant and towards the home operator of the subscriber.

Figure 2 is a sequence diagram showing signalling between the involved entities for issuing and using accounting certificates.

Payment transactions between the online merchant and the local operator (PKIp) are not included in the sequence diagram. These payments are assumed to take place via 'off-line' transactions, based on predefined agreements between the service provider and the operator.

It is expected that online merchants will find the solution presented here more attractive than solutions where they (the merchants) have to collect the money directly from the subscribers. The use of accounting certificates is especially relevant for micro payments (up to 10€), but due to the high security connected with the use of certificates, the method presented can also be considered to use them for macro payments (above 10€).

Due to the nature of certificates (high security, short-lived validity etc.), they are considered to be safer and less open to fraud than credit card use. Consequently, it is expected that subscribers will be more willing to use short-lived accounting certificates than to reveal personal credit card details to unknown parties, especially when using local services in roaming scenarios.

## Claims

1. A method of using accounting certificates to allow a subscriber of a home network to purchase services or products via a mobile communications network, **characterised in that** the method comprises:
sending a request for an accounting certificate from a subscriber's mobile terminal (1) to a Network Application Function node (5) in a visited network (2), the Network Application Function node (5) comprising a Public Key Infrastructure portal (6) which uses shared secret keys to communicate with said subscriber's mobile terminal:
upon receipt of the request at said Network Application Function node (5), (communicating between the Public Key Infrastructure portal (6) and a Bootstrapping Server Function (10) of the subscriber's home network (9) to obtain at the Public Key Infrastructure portal (6) a shared secret previously agreed between the Bootstrapping Server Function and the subscriber's mobile terminal (1) and an identity of the responsible online charging system (8) within the home network (9), and using said identity to send an authorisation request from said Network Application Function node (5) to said online charging system (8);
at the online charging system (8), making a decision on said request based upon the subscriber's account data, and returning either an accept or deny service request message to said Network Application Function node (5);
in the event that an accept service request message is received by said Network Application Function, sending the requested accounting certificate to the subscriber terminal (1); and
sending the accounting certificate from the subscriber terminal to the provider of a product or service to be paid for.

2. A method according to claim 1, wherein said online charging system (8) to which said authorisation request is sent is responsible for coordinating all charges made against subscribers of the home network (9).

3. A method according to anyone of the preceding claims, wherein the provider of a product or service to be paid for, sends received accounting certificates to said Network Application Function node (5) for settlement.

4. A method according to anyone of the preceding claims, wherein the online charging system (8) reports previously reserved credit as used and withdrawn, when a service has been delivered and a signed invoice received from the service provider.

5. A method according to anyone of the preceding claims, wherein the provider of a product or service sends an invoice to the subscriber terminal (1) for products or services which the subscriber proposes to purchase and, after receipt of this invoice, the subscriber terminal sends the request for the accounting certificate to the Network Application Function node (5).

6. A method according to anyone of claims 1 to 4, wherein the request for an accounting certificate is sent prior to receipt of the invoice at the terminal.

7. A method according to anyone of the preceding claims, wherein said accounting certificate is secured by bootstrapping on an authentication and shared secret agreement procedure performed between the mobile terminal (1) and the subscriber's home network (9).

8. A Network Application Function node (5) for use in a first network of a mobile communications system, the node having an interface towards one or more online charging functions, each online charging function coordinating charges for subscribers of a home network (9) to which the online charging function belongs, an interface towards one or more product or service providers, and an interface towards subscribers roaming in said first network and wishing to purchase products or services made available by said providers, the node being **characterised by**:
a Public Key Infrastructure portal (6) which uses shared secret keys to communicate with subscriber's mobile terminal;
means for receiving from a subscriber an accounting certificate request;
means for communicating between the Public Key Infrastructure portal (6) and a Bootstrapping Server Function of the subscriber's home network (9) to obtain at the Public Key Infrastructure portal (6) a shared secret previously agreed between the Bootstrapping Server Function and the subscriber's mobile terminal (1) and an identity of the responsible online charging system (8) within the home network (9), and for using said identity to send an authorisation request from said node to an online charging system of the subscriber's home network (9);
means for receiving an accept or deny request from said online charging function; and
means for sending the requested accounting certificate to the subscriber terminal (1) in the event that an accept service request message is received by the node.

## Patentansprüche

1. Verfahren zur Verwendung von Abrechnungszertifikaten, um einem Teilnehmer eines Heimatnetzes den Erwerb von Diensten oder Produkten über ein Mobilkommunikationsnetz zu ermöglichen,
**dadurch gekennzeichnet, dass** das Verfahren umfasst:
Senden einer Anforderung für ein Abrechnungszertifikat vom mobilen Endgerät (1) eines Teilnehmers an einen Netzanwendungsfunktionsknoten (5) in einem Besuchernetz (2), wobei der Netzanwendungsfunktionsknoten (5) ein PKI (Public Key Infrastructure)-Portal (6) umfasst, das gemeinsame Geheimschlüssel verwendet, um mit dem mobilen Endgerät des Teilnehmers zu kommunizieren;
Kommunizieren bei Empfang der Anforderung am Netzanwendungsfunktionsknoten (5) zwischen dem PKI (Public Key Infrastructure)-Portal (6) und einer Bootstrapping-Serverfunktion (10) des Heimatnetzes (9) des Teilnehmers, um am PKI (Public Key Infrastructure)-Portal (6) einen gemeinsamen Geheimschlüssel, der zuvor zwischen der Bootstrapping-Serverfunktion und dem mobilen Endgerät (1) des Teilnehmers vereinbart wurde, und eine Identität des verantwortlichen Online-Abrechnungssystems (8) innerhalb des Heimatnetzes (9) zu erhalten, und Verwenden der Identität, um eine Berechtigungsanforderung vom Netzanwendungsfunktionsknoten (5) an das Online-Abrechnungssystem (8) zu senden;
Treffen einer Entscheidung am Online-Abrechnungssystem (8) über die Anforderung basierend auf den Kontodaten des Teilnehmers und Zurücksenden entweder einer Dienstanforderungsannahme- oder zurückweisungsnachricht an den Netzanwendungsfunktionsknoten (5);
Senden, falls eine Dienstanforderungsannahmenachricht durch den Netzanwendungsfunktionsknoten empfangen wird, des angeforderten Abrechnungszertifikats an das Teilnehmerendgerät (1); und
Senden des Abrechnungszertifikats vom Teilnehmerendgerät an den Anbieter eines zu bezahlenden Produkts oder Dienstes.

2. Verfahren nach Anspruch 1, wobei das Online-Abrechnungssystem (8), an welches die Berechtigungsanforderung gesendet wird, für die Koordination aller Gebühren verantwortlich ist, die Teilnehmern des Heimatnetzes (9) verrechnet werden.

3. Verfahren nach einem der vorhergehenden Ansprüche, wobei der Anbieter eines zu bezahlenden Produkts oder Dienstes empfangene Abrechnungszertifikate zur Begleichung an den Netzanwendungsfunktionsknoten (5) sendet.

4. Verfahren nach einem der vorhergehenden Ansprüche, wobei das Online-Abrechnungssystem (8) vorher reservierten Kredit, wie verwendet und abgehoben, meldet, wenn ein Dienst zugestellt und eine gezeichnete Rechnung vom Dienstanbieter empfangen wurde.

5. Verfahren nach einem der vorhergehenden Ansprüche, wobei der Anbieter eines Produkts oder Dienstes eine Rechnung an das Teilnehmerendgerät (1) für Produkte oder Dienste sendet, die der Teilnehmer zu erwerben vorschlägt, und das Teilnehmerendgerät nach dem Empfang dieser Rechnung die Anforderung für das Abrechnungszertifikat an den Netzanwendungsfunktionsknoten (5) sendet.

6. Verfahren nach einem der Ansprüche 1 bis 4, wobei die Anforderung für ein Abrechnungszertifikat vor dem Empfang der Rechnung am Endgerät gesendet wird.

7. Verfahren nach einem der vorhergehenden Ansprüche, wobei das Abrechnungszertifikat bei einer Prozedur zur Authentifizierung und Vereinbarung eines gemeinsamen Geheimschlüssels, die zwischen dem mobilen Endgerät (1) und dem Heimatnetz (9) des Teilnehmers durchgeführt wird, durch Bootstrapping gesichert wird.

8. Netzanwendungsfunktionsknoten (5) zur Verwendung in einem ersten Netz eines Mobilkommunikationssystems, wobei der Knoten eine Schnittstelle zu einer oder mehreren Online-Abrechnungsfunktionen, wobei jede Online-Abrechnungsfunktion Gebühren für Teilnehmer eines Heimatnetzes (9) koordiniert, zu welchem die Online-Abrechnungsfunktion gehört, eine Schnittstelle zu einem oder mehreren Produkt- oder Dienstanbietern und eine Schnittstelle zu Teilnehmern aufweist, die im ersten Netz wandern und Produkte oder Dienste zu erwerben wünschen, die von den Anbietern verfügbar gemacht werden, wobei der Knoten **gekennzeichnet ist durch**:
ein PKI (Public Key Infrastructure)-Portal (6), das gemeinsame Geheimschlüssel zum Kommunizieren mit dem mobilen Endgerät des Teilnehmers verwendet;
Mittel zum Empfangen einer Abrechnungszertifikatsanforderung von einem Teilnehmer;
Mittel zum Kommunizieren zwischen dem PKI (Public Key Infrastructure)-Portal (6) und einer Bootstrapping-Serverfunktion des Heimatnetzes (9) des Teilnehmers, um am PKI (Public Key Infrastructure)-Portal (6) einen gemeinsamen Geheimschlüssel, der zuvor zwischen der Bootstrapping-Serverfunktion und dem mobilen Endgerät (1) des Teilnehmers vereinbart wurde, und eine Identität des verantwortlichen Online-Abrechnungssystems (8) innerhalb des Heimatnetzes (9) zu erhalten, und zum Verwenden der Identität, um eine Berechtigungsanforderung vom Knoten an das Online-Abrechnungssystem des Heimatnetzes (9) des Teilnehmers zu senden;
Mittel zum Empfangen einer Annahme- oder Zurückweisungsnachricht von der Online-Abrechnungsfunktion; und
Mittel zum Senden des angeforderten Abrechnungszertifikats an das Teilnehmerendgerät (1), falls eine Dienstanforderungsannahmenachricht **durch** den Knoten empfangen wird.

## Revendications

1. Procédé d'utilisation de certificats de comptabilité pour permettre à un abonné d'un réseau domestique d'acheter des services ou des produits par l'intermédiaire d'un réseau de communication mobile, **caractérisé en ce que** le procédé comprend :
l'envoi d'une demande d'un certificat de comptabilité d'un terminal mobile d'un abonné (1) à un noeud de fonction d'application de réseau (5) dans un réseau visité (2), le noeud de fonction d'application de réseau (5) comprenant un portail d'infrastructure de clé publique (6) qui utilise des clés secrètes partagées pour communiquer avec ledit terminal mobile dudit abonné ;
à la réception de la demande au dit noeud de fonction d'application de réseau (5), la communication entre le portail d'infrastructure de clé (6) et une fonction de serveur d'auto-amorçage (10) du réseau domestique (9) de l'abonné pour obtenir, au portail d'infrastructure de clé publique (6), un secret partagé précédemment convenu entre la fonction de serveur d'auto-amorçage et le terminal mobile (1) de l'abonné et une identité du système de débit en ligne responsable (8) à l'intérieur du réseau domestique (9), et l'utilisation de ladite identité pour envoyer une demande d'autorisation dudit noeud de fonction d'application de réseau (5) au dit système de débit en ligne (8) ;
au système de débit en ligne (8), la prise d'une décision relative à ladite demande sur la base de données de compte de l'abonné, et le retour d'un message d'acceptation ou de refus de demande de service au dit noeud de fonction d'application de réseau (5) ;
dans le cas où un message d'acceptation de demande de service est reçu par ladite fonction d'application de réseau, l'envoi du certificat de comptabilité demandé au terminal (1) de l'abonné ; et
l'envoi du certificat de comptabilité du terminal abonné au fournisseur d'un produit ou d'un service à payer.

2. Procédé selon la revendication 1, dans lequel ledit système de débit en ligne (8) auquel ladite demande d'autorisation est envoyée est responsable de coordonner tous les débits effectués par les abonnés du réseau domestique (9).

3. Procédé selon l'une quelconque des revendications précédentes, dans lequel le fournisseur d'un produit ou d'un service à payer envoie des certificats de comptabilité reçus au dit noeud de fonction d'application de réseau (5) pour un règlement.

4. Procédé selon l'une quelconque des revendications précédentes, dans lequel le système de débit en ligne (8) rapporte qu'un crédit précédemment réservé a été utilisé et retiré, lorsqu'un service a été livré et une facture signée a été reçue en provenance du fournisseur de service.

5. Procédé selon l'une quelconque des revendications précédentes, dans lequel le fournisseur d'un produit ou d'un service envoie une facture au terminal d'abonné (1) pour des produits ou des services que l'abonné propose d'acheter et, après la réception de cette facture, le terminal d'abonné envoie la demande du certificat de comptabilité au noeud de fonction d'application de réseau (5).

6. Procédé selon l'une quelconque des revendications 1 à 4, dans lequel la demande d'un certificat de comptabilité est envoyée avant la réception de la facture au terminal.

7. Procédé selon l'une quelconque des revendications précédentes, dans lequel ledit certificat de comptabilité est sécurisé par l'auto-amorçage sur une procédure d'authentification et de convention secrète partagée entre le terminal mobile (1) et le réseau domestique (9) de l'abonné.

8. Noeud de fonction d'application de réseau (5) destiné à être utilisé dans un premier réseau d'un système de communication mobile, le noeud ayant une interface avec une ou plusieurs fonctions de débit en ligne, chaque fonction de débit en ligne coordonnant des débits pour des abonnés d'un réseau domestique (9) auquel la fonction de débit en ligne appartient, une interface avec un ou plusieurs fournisseurs de produits ou de services, et une interface avec des abonnés en itinérance dans ledit premier réseau et souhaitant acheter des produits ou des services mis à leur disposition par lesdits fournisseurs, le noeud étant **caractérisé par** :
un portail d'infrastructure de clé publique (6) qui utilise des clés secrètes partagées pour communiquer avec un terminal mobile d'un abonné ;
des moyens pour recevoir une demande de certificat de comptabilité en provenance d'un abonné ;
des moyens pour communiquer entre le portail d'infrastructure de clé publique (6) et une fonction de serveur d'auto-amorçage du réseau domestique (9) de l'abonné afin d'obtenir, au portail d'infrastructure de clé publique (6), un secret partagé précédemment convenu entre la fonction de serveur d'auto-amorçage et le terminal mobile (1) de l'abonné et une identité du système de débit en ligne responsable (8) à l'intérieur du réseau domestique (9), et pour utiliser ladite identité pour envoyer une demande d'autorisation dudit noeud à un système de débit en ligne du réseau domestique (9) de l'abonné ;
des moyens pour recevoir un message d'acceptation ou de refus de demande en provenance de ladite fonction de débit en ligne ; et
des moyens pour envoyer le certificat de comptabilité demandé au terminal d'abonné (1) dans le cas où un message d'acceptation de demande de service est reçu par le noeud.
